# EUROPEAN PATENT APPLICATION

(11) **EP 4 714 695 A1**
(43) Date of publication of application: **25.03.2026**
(21) Application number: 24822783.7
(22) Date of filing: 14.06.2024
(51) Int. Cl.: B60H 1/32, B60H 1/00

(54) **THERMAL MANAGEMENT SYSTEM AND NEW ENERGY VEHICLE**

(30) Priority: 15.06.2023 CN 202310712923
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: PENG, Changbo, Ningbo, Zhejiang 315899 (CN); SHEN, Shangmiao, Ningbo, Zhejiang 315899 (CN)
(74) Representative: Michalski Hüttermann & Partner Patentanwälte mbB
(86) International application number: PCT/CN2024/099166
(87) International publication number: WO 2024/255835

(57) **Abstract**

A thermal management system and a new energy vehicle. The thermal management system includes a refrigerant circuit (11), and a first space (12) and a second space (13) disposed separately. The first space (12) is in communication with at most one of an outdoor space (14) and an indoor space (15), and the second space (13) is in communication with at most one of the outdoor space (14) and the indoor space (15). The refrigerant circuit (11) includes an evaporator (16), a condenser (17), a first control valve (18), and a compressor (19). The evaporator (16) is disposed in the first space (12), and the condenser (17) is disposed in the second space (13). The compressor (19) includes an air inlet (24) and an air outlet (25). One end of the evaporator (16) is connected to the first control valve (18), and the other end of the evaporator (16) is connected to the air inlet (24). One end of the condenser (17) is connected to the air outlet (25), and the other end of the condenser (17) is connected to the first control valve (18).

## Description

The present disclosure claims priority to Chinese Patent Application No. 202310712923.9, filed on June 15, 2023, which is incorporated herein by reference in its entirety.

### TECHNICAL FIELD

The present disclosure relates to, but is not limited to, the field of thermal management technologies, and in particular relates to a thermal management system and a new energy vehicle.

### BACKGROUND

With the gradual development of science and technology, new energy vehicles gradually come into public view. New energy vehicles are vehicles that use an unconventional vehicle fuel as a power source. New energy vehicles usually have functions such as in-vehicle cooling and heating.

### SUMMARY

The following is a summary of subject matter described in detail herein. This summary is not intended to limit the scope of protection of the claims.

The present disclosure provides a thermal management system and a new energy vehicle.

An aspect of the present disclosure provides a thermal management system, including: a first space and a second space that are separately disposed, where the first space is in communication with at most one of an outdoor space and an indoor space, and the second space is in communication with at most one of the outdoor space and the indoor space; and a refrigerant circuit, including an evaporator, a condenser, a first control valve, and a compressor, where the evaporator is disposed in the first space, the condenser is disposed in the second space, the compressor includes an air inlet and an air outlet, one end of the evaporator is connected to the first control valve, the other end of the evaporator is connected to the air inlet, one end of the condenser is connected to the air outlet, and the other end of the condenser is connected to the first control valve.

Optionally, the thermal management system further includes a coolant circuit and a refrigerant branch, where the refrigerant branch is connected between the condenser and the air inlet, and is connected in parallel with the first control valve and the evaporator; the refrigerant branch includes a second control valve and a first heat exchanger, where the second control valve is located between the condenser and the first heat exchanger; the coolant circuit includes a first coolant sub-circuit passing through the first heat exchanger; and when the second control valve is in an open state, the refrigerant branch is in communication, and a coolant flowing through the first coolant sub-circuit exchanges heat with a refrigerant flowing through the refrigerant branch at the first heat exchanger.

Optionally, the first coolant sub-circuit further includes a heater configured to heat the coolant, and the heater is connected to the first heat exchanger; and when the second control valve is in the open state and the heater is in an on state, the coolant flowing through the heater is heated, and the heated coolant exchanges heat with the refrigerant flowing through the refrigerant branch at the first heat exchanger.

Optionally, the coolant circuit further includes a second coolant sub-circuit, the second coolant sub-circuit includes a first liquid pump and a battery, and the first liquid pump is connected to the battery and is configured to deliver the coolant to the battery; the first coolant sub-circuit is selectively in communication with the second coolant sub-circuit via a first four-way valve and a second four-way valve; and when the first coolant sub-circuit is in communication with the second coolant sub-circuit and the second control valve is in the open state, the coolant flowing through the battery exchanges heat with the refrigerant flowing through the refrigerant branch at the first heat exchanger.

Optionally, the thermal management system further includes a coolant circuit, where the refrigerant circuit further includes a second heat exchanger disposed between the air outlet and the condenser; the coolant circuit includes a third coolant sub-circuit passing through the second heat exchanger, and the third coolant sub-circuit includes a second liquid pump and a third control valve connected to the second liquid pump; and when the third control valve is in an open state, the second liquid pump delivers a coolant to the second heat exchanger, so that the coolant flowing through the third coolant sub-circuit exchanges heat with a refrigerant flowing through the refrigerant circuit at the second heat exchanger.

Optionally, the third coolant sub-circuit further includes an electronic device assembly, and the second liquid pump is connected to the electronic device assembly and is configured to deliver the coolant to the electronic device assembly.

Optionally, the coolant circuit further includes a fourth coolant sub-circuit, and the fourth coolant sub-circuit includes a radiator; the fourth coolant sub-circuit is selectively in communication with the third coolant sub-circuit via a first four-way valve and a second four-way valve; and when the fourth coolant sub-circuit is in communication with the third coolant sub-circuit and the third control valve is in the open state, the coolant flowing through the radiator exchanges heat with the refrigerant flowing through the refrigerant circuit at the second heat exchanger.

Optionally, the thermal management system further includes a first air flap disposed between the first space and the second space, where when the first air flap is opened, the first space is in communication with the second space; and when the first air flap is closed, the first space is isolated from the second space.

Optionally, the thermal management system further includes a first fan and a second air flap, where the first fan is disposed in the first space, the first space is provided with a first air vent, and the first fan is configured to deliver air from the first air vent to the evaporator; and the second air flap is rotatably disposed at the first air vent, so that the first space is in communication with at least one of the outdoor space or the indoor space.

Optionally, the thermal management system further includes a second fan, the second fan is disposed in the second space, the second space is provided with a second air vent, the second air vent enables communication between the outdoor space and the second space, and the second fan is configured to deliver air from the second air vent to the condenser.

Optionally, the thermal management system further includes a third air flap and a fourth air flap, where the third air flap is openably disposed between the first space and the outdoor space, and when the third air flap is opened, the first space is in communication with the outdoor space, and when the third air flap is closed, the first space is not in communication with the outdoor space; and the fourth air flap is openably disposed between the first space and the indoor space, and when the fourth air flap is opened, the first space is in communication with the indoor space, and when the fourth air flap is closed, the first space is not in communication with the indoor space.

Optionally, the thermal management system further includes a fifth air flap and a sixth air flap, where the fifth air flap is openably disposed between the second space and the outdoor space, when the fifth air flap is opened, the second space is in communication with the outdoor space, and when the fifth air flap is closed, the second space is not in communication with the outdoor space; and the sixth air flap is openably disposed between the second space and the indoor space, when the sixth air flap is opened, the second space is in communication with the indoor space, and when the sixth air flap is closed, the second space is not in communication with the indoor space.

Optionally, the thermal management system further includes a coolant circuit, where the coolant circuit includes a first coolant sub-circuit, a second coolant sub-circuit, a third coolant sub-circuit, a fourth coolant sub-circuit, a first four-way valve, and a second four-way valve; and the first coolant sub-circuit, the second coolant sub-circuit, the third coolant sub-circuit, and the fourth coolant sub-circuit are all connected to the first four-way valve and the second four-way valve.

Optionally, the fourth coolant sub-circuit includes a radiator, a three-way valve, a main path, a first branch, and a second branch, the radiator is disposed on the first branch, a first end of the three-way valve is connected to the main path, a second end of the three-way valve is connected to the first branch, and a third end of the three-way valve is connected to the second branch.

Another aspect of the present disclosure provides a new energy vehicle, including the thermal management system according to any one of the foregoing embodiments.

According to the thermal management system provided in the present disclosure, the evaporator is disposed in the first space, and the first space is in communication with at most one of the outdoor space and the indoor space; and the condenser is disposed in the second space, and the second space is in communication with at most one of the outdoor space and the indoor space. When the thermal management system is in a cooling state, the first space may be in communication with the indoor space, and cool air generated by the evaporator is output to the indoor space. When the thermal management system is in a heating state, the second space may be in communication with the indoor space, and warm air generated by the condenser is output to the indoor space. In this way, there is no need to provide an outdoor heat exchanger, and the same circuit is used in the cooling state and the heating state, so that the structure of the thermal management system is simpler.

It is to be understood that both the foregoing general description and the following detailed description are exemplary and explanatory only, and are not restrictive of the present disclosure. Other aspects will become apparent upon reading and understanding the drawings and detailed description.

### BRIEF DESCRIPTION OF DRAWINGS

The drawings herein, which are incorporated into and constitute a part of this specification, illustrate embodiments consistent with the present disclosure, and are used in conjunction with the specification to explain the principles of the present disclosure.
FIG. 1 illustrates a schematic diagram of a thermal management system according to an exemplary embodiment of the present disclosure.
FIG. 2 illustrates a schematic diagram of the thermal management system shown in FIG. 1 in another state.
FIG. 3 illustrates a schematic diagram of the thermal management system shown in FIG. 1 in still another state.
FIG. 4 illustrates a schematic diagram of the thermal management system shown in FIG. 1 in yet another state.
FIG. 5 illustrates a schematic diagram of a thermal management system according to another exemplary embodiment of the present disclosure.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with the present disclosure. Instead, they are merely examples of apparatuses and methods consistent with some aspects of the present disclosure as detailed in the appended claims.

Terminology used herein is for the purpose of describing particular embodiments only, and is not intended to be limiting of the present disclosure. Unless otherwise defined, the technical terms or scientific terms used in the present disclosure should have the common meanings understood by those of ordinary skill in the art to which the present disclosure belongs. "First", "second", and similar words used in the specification and claims of the present disclosure do not indicate any order, quantity, or importance, but are merely used to distinguish between different components. Similarly, words such as "a" or "an" do not indicate quantity limitation, but indicate the presence of at least one. "A plurality of" or "several" indicate two or more. Unless otherwise indicated, words such as "front", "rear", "lower" and/or "upper", "top", "bottom" and the like are only for convenience of description, and are not limited to one position or one spatial orientation. Words such as "include" or "comprise" indicate that elements or objects before "include" or "comprise" cover elements or objects listed after "include" or "comprise" and their equivalents, and do not exclude other elements or objects. Words such as "connect" or "couple" are not limited to physical or mechanical connections, and may include electrical connections, whether direct or indirect.

The singular forms "a", "said" and "the" used in the present disclosure and the appended claims are also intended to include plural forms, unless the context clearly indicates otherwise. It should also be understood that the term "and/or" as used herein refers to and encompasses any or all possible combinations of one or more of the associated listed items.

Some new energy vehicles need to be configured with an outdoor heat exchanger as an evaporator or condenser, in addition to an indoor condenser and an indoor evaporator. When the vehicle is in a cooling state, the outdoor heat exchanger serves as the condenser, and the outdoor heat exchanger and the indoor evaporator form a first circuit; when the vehicle is in a heating state, the outdoor heat exchanger serves as the evaporator, and the outdoor heat exchanger and the indoor condenser form a second circuit. A cooling process and a heating process are respectively performed in the two circuits, which has a complex structure.

In view of this, the present disclosure provides a thermal management system and a new energy vehicle. The thermal management system and the new energy vehicle in the present disclosure will be described in detail below with reference to the accompanying drawings. Unless otherwise contradictory, features in the following embodiments and implementations may be combined with each other.

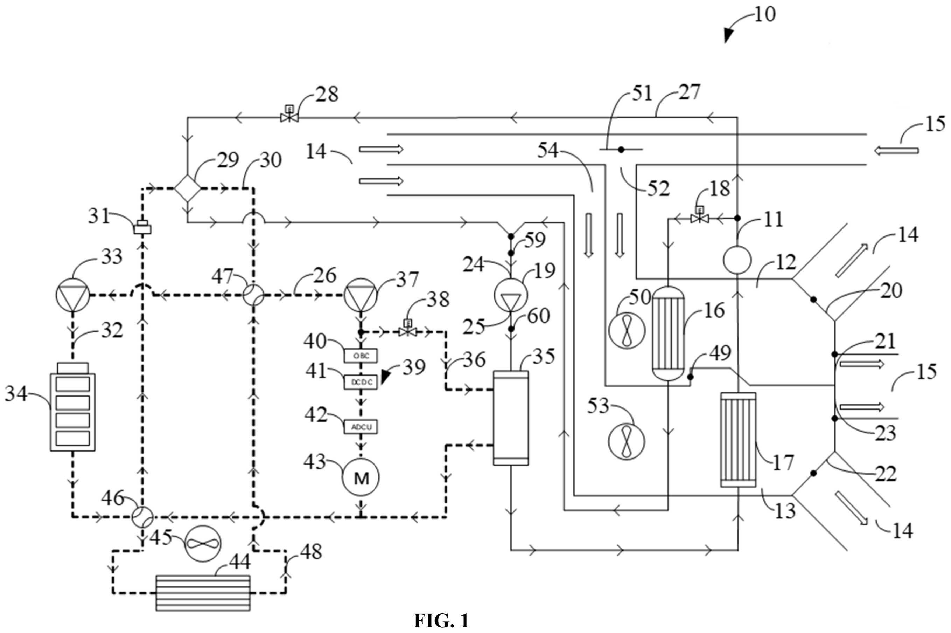

Referring to FIG. 1 to FIG. 4, the present disclosure provides a thermal management system 10, including a refrigerant circuit 11, and a first space 12 and a second space 13 that are separately disposed. The first space 12 is in communication with at most one of an outdoor space 14 and an indoor space 15. When the thermal management system 10 is applied to a new energy vehicle, the outdoor space 14 may refer to an environment outside the new energy vehicle, and the indoor space 15 may refer to a cab of the new energy vehicle. The first space 12 may be in communication with the outdoor space 14, with the indoor space 15, or with neither the outdoor space 14 nor the indoor space 15. In some embodiments, the thermal management system 10 further includes a third air flap 20 and a fourth air flap 21. The third air flap 20 is openably disposed between the first space 12 and the outdoor space 14. For example, the third air flap 20 may be rotatably disposed between the first space 12 and the outdoor space 14. When the third air flap 20 is opened, the first space 12 is in communication with the outdoor space 14; and when the third air flap 20 is closed, the first space 12 is not in communication with the outdoor space 14. The fourth air flap 21 is openably disposed between the first space 12 and the indoor space 15. For example, the fourth air flap 21 may be rotatably disposed between the first space 12 and the indoor space 15. When the fourth air flap 21 is opened, the first space 12 is in communication with the indoor space 15; and when the fourth air flap 21 is closed, the first space 12 is not in communication with the indoor space 15. The second space 13 is in communication with at most one of the outdoor space 14 and the indoor space 15. The second space 13 may be in communication with the outdoor space 14, with the indoor space 15, or with neither the outdoor space 14 nor the indoor space 15. In some embodiments, the thermal management system 10 further includes a fifth air flap 22 and a sixth air flap 23. The fifth air flap 22 is openably disposed between the second space 13 and the outdoor space 14. For example, the fifth air flap 22 may be rotatably disposed between the second space 13 and the outdoor space 14. When the fifth air flap 22 is opened, the second space 13 is in communication with the outdoor space 14; and when the fifth air flap 22 is closed, the second space 13 is not in communication with the outdoor space 14. The sixth air flap 23 is openably disposed between the second space 13 and the indoor space 15. For example, the sixth air flap 23 may be rotatably disposed between the second space 13 and the indoor space 15. When the sixth air flap 23 is opened, the second space 13 is in communication with the indoor space 15; and when the sixth air flap 23 is closed, the second space 13 is not in communication with the indoor space 15.

The refrigerant circuit 11 includes an evaporator 16, a condenser 17, a first control valve 18, and a compressor 19. The first control valve 18 may be a solenoid valve or an electronic expansion valve. A controller may control opening and closing of the first control valve 18, to establish or interrupt communication in the refrigerant circuit 11. When the first control valve 18 is opened, the refrigerant circuit 11 may be in communication and a refrigerant may flow in the refrigerant circuit 11. In this case, the evaporator 16 may be used for cooling, and the condenser 17 may be used for heating. The evaporator 16 is disposed in the first space 12, and the condenser 17 is disposed in the second space 13, so that the evaporator 16 and the condenser 17 can be disposed separately. The compressor 19 includes an air inlet 24 and an air outlet 25. The first control valve 18 is connected to one end of the evaporator 16, and the other end of the evaporator 16 is connected to the air inlet 24. The air outlet 25 is connected to one end of the condenser 17, and the other end of the condenser 17 is connected to the first control valve 18. It can be understood that the first space 12 is in communication with at most one of the outdoor space 14 and the indoor space 15, so that an air outlet side of the evaporator 16 is in communication with at most one of the outdoor space 14 and the indoor space 15. The second space 13 is in communication with at most one of the outdoor space 14 and the indoor space 15, so that an air outlet side of the condenser 17 is in communication with at most one of the outdoor space 14 and the indoor space 15. In this way, cool air, warm air, or a mixture thereof may be delivered to the indoor space 15.

According to the thermal management system 10 provided in the present disclosure, the evaporator 16 is disposed in the first space 12, and the first space 12 is in communication with at most one of the outdoor space 14 and the indoor space 15. The condenser 17 is disposed in the second space 13, and the second space 13 is in communication with at most one of the outdoor space 14 and the indoor space 15. When the thermal management system 10 is in the cooling state, the third air flap 20 may be closed, and the fourth air flap 21 may be opened, so that the first space 12 is in communication with the indoor space 15, thereby outputting the cool air generated by the evaporator 16 to the indoor space 15. In this case, outdoor fresh air may be blown to the condenser 17, the fifth air flap 22 may be opened, and the sixth air flap 23 may be closed, so that the warm air is blown to the outdoor space 14. When the thermal management system 10 is in the heating state, the fifth air flap 22 may be closed, and the sixth air flap 23 may be opened, so that the second space 13 is in communication with the indoor space 15, thereby outputting the warm air generated by the condenser 17 to the indoor space 15. The third air flap 20 may be opened, and the fourth air flap 21 may be closed, so that the cool air is blown to the outdoor space 14. In this way, there is no need to provide an outdoor heat exchanger, and the same circuit is used in the cooling state and the heating state, so that the structure of the thermal management system 10 is simpler, which can reduce the number of pipelines and charge of the refrigerant, thereby reducing the assembly time and saving the cost. In addition, using the same circuit in the cooling state and the heating state can reduce the flow resistance in the refrigerant circuit 11, thereby reducing the energy consumption, and saving the overall energy.

In some embodiments, the thermal management system 10 includes a first sensor 59 and a second sensor 60. The first sensor 59 is disposed on a pipeline connected to the air inlet 24, and the second sensor 60 is disposed on a pipeline connected to the air outlet 25. The first sensor 59 and the second sensor 60 are configured to detect pressures and temperatures at the air inlet 24 and the air outlet 25 of the compressor 19, so that a rotational speed of the compressor 19 can be adjusted according to the detected pressures and temperatures.

In some embodiments, the thermal management system 10 includes a first air flap 49 disposed between the first space 12 and the second space 13. The first air flap 49 may be rotatably disposed between the first space 12 and the second space 13. When the first air flap 49 is opened, the first space 12 is in communication with the second space 13; and when the first air flap 49 is closed, the first space 12 is isolated from the second space 13. When an ambient temperature is too low or too high, the first air flap 49 may be opened to enable air mixing. For example, when the ambient temperature is relatively low and a temperature of the indoor space 15 is higher than the ambient temperature, the first air flap 49 may be opened to allow communication between the first space 12 and the second space 13, so that the condenser 17 is heated by using the relatively high temperature of the indoor space 15, thus reducing energy consumption.

In some embodiments, the thermal management system 10 includes a first fan 50 and a second air flap 51. The first fan 50 may be a blower. The first fan 50 is disposed in the first space 12, the first space 12 is provided with a first air vent 52, and the first fan 50 is configured to deliver air from the first air vent 52 to an air inlet side of the evaporator 16. The second air flap 51 is rotatably disposed at the first air vent 52, so as to enable the first space 12 to be in communication with at least one of the outdoor space 14 or the indoor space 15. The first space 12 may be in communication with both the outdoor space 14 and the indoor space 15, and the first fan 50 may deliver air from the outdoor space 14 and the indoor space 15 to the air inlet side of the evaporator 16. The first space 12 may be in communication with one of the outdoor space 14 and the indoor space 15, so that the first fan 50 may deliver the air from the outdoor space 14 or the indoor space 15 to the air inlet side of the evaporator 16. In this way, when the thermal management system 10 is in the heating state, the second air flap 51 can be controlled to rotate, so that the first space 12 is in communication with the indoor space 15, and the first space 12 is not in communication with the outdoor space 14. In this way, the first fan 50 can deliver the air from the indoor space 15 to the air inlet side of the evaporator 16, thereby fully absorbing heat from the indoor space 15 and reducing the energy consumption.

In some embodiments, the thermal management system 10 includes a second fan 53. The second fan 53 may be a blower. The second fan 53 is disposed in the second space 13, and the second space 13 is provided with a second air vent 54. The second air vent 54 enables communication between the outdoor space 14 and the second space 13. The second fan 53 is configured to deliver the air from the second air vent 54 to an air inlet side of the condenser 17. In this way, the air can be delivered from the outdoor space 14 to the air inlet side of the condenser 17. The first fan 50 may be disposed in the first space 12, and the second fan 53 may be disposed in the second space 13, so that the condenser 17 and the evaporator 16 may be provided with independent air vents for air intake.

In some embodiments, the thermal management system 10 further includes a coolant circuit 26 and a refrigerant branch 27. Coolant may flow in the coolant circuit 26. The coolant may be a mixture of water and ethylene glycol. The refrigerant branch 27 is connected between the condenser 17 and the air inlet 24, and is connected in parallel with the first control valve 18 and the evaporator 16. When the refrigerant branch 27 is in communication, a refrigerant flowing out of the condenser 17 may flow to the first control valve 18 in one path and flow to the refrigerant branch 27 in the other path. The refrigerant branch 27 includes a second control valve 28 and a first heat exchanger 29. The second control valve 28 may be a solenoid valve or an electronic expansion valve. The second control valve 28 is located between the condenser 17 and the first heat exchanger 29. The second control valve 28 may be located upstream of the first heat exchanger 29. The controller may control opening and closing of the second control valve 28 to establish or interrupt the communication in the refrigerant branch 27. The coolant circuit 26 includes a first coolant sub-circuit 30 that passes through the first heat exchanger 29. When the second control valve 28 is in an open state, the refrigerant branch 27 is in communication, so that the refrigerant can flow in the refrigerant branch 27. The refrigerant can flow from the condenser 17 to the second control valve 28, the first heat exchanger 29, and the air inlet 24 of the compressor 19 in sequence. The coolant flowing through the first coolant sub-circuit 30 exchanges heat with the refrigerant flowing through the refrigerant branch 27 at the first heat exchanger 29. The heat exchange between the first coolant sub-circuit 30 and the refrigerant branch 27 can be achieved by means of the first heat exchanger 29. In this way, the first coolant sub-circuit 30 may be used to heat the refrigerant branch 27, the first coolant sub-circuit 30 may be used to cool the refrigerant branch 27, or the refrigerant branch 27 may be used to cool the first coolant sub-circuit 30, which is not limited by the present disclosure.

In some embodiments, the first coolant sub-circuit 30 further includes a heater 31 for heating the coolant. The heater 31 may be a High Voltage Coolant Heater (HVCH). When the second control valve 28 is in the open state and the heater 31 is in an on state, the coolant flowing through the heater 31 is heated, and the heated coolant exchanges heat with the refrigerant flowing through the refrigerant branch 27 at the first heat exchanger 29. At a relatively low temperature, the coolant heated by the heater 31 may be used to heat the first heat exchanger 29, so as to heat the refrigerant circuit 11, so that the temperature of the indoor space 15 can be gradually increased. Heating the refrigerant circuit 11 using the heater 31 can reduce the energy consumption, reduce the power consumption in the heating state in winter, and extend an operating temperature range of the thermal management system 10, so that the thermal management system 10 can function in environments as cold as -30°C. When the thermal management system 10 is applied to a new energy vehicle, a driving range of the new energy vehicle during winter can be improved.

In some embodiments, the coolant circuit 26 includes a second coolant sub-circuit 32, and the second coolant sub-circuit 32 includes a first liquid pump 33 and a battery 34. The first liquid pump 33 may pressurize the coolant, to ensure that the coolant can circulate in the second coolant sub-circuit 32. The first liquid pump 33 is connected to the battery 34, and is configured to deliver the coolant to the battery 34, so that the battery 34 can be cooled or heated, and the battery 34 can be maintained within an appropriate operating temperature range. The first coolant sub-circuit 30 is selectively in communication with the second coolant sub-circuit 32. Specifically, the first coolant sub-circuit 30 may or may not be in communication with the second coolant sub-circuit 32. When the first coolant sub-circuit 30 is in communication with the second coolant sub-circuit 32, and when the second control valve 28 is in the open state, the coolant flowing through the battery 34 exchanges heat with the refrigerant flowing through the refrigerant branch 27 at the first heat exchanger 29. When the heater 31 is in the on state, the heater 31 may heat the coolant flowing through the battery 34, so that a temperature of the battery 34 may gradually increase, to adapt to starting of the battery 34 at a low temperature. When the heater 31 is in an off state, the low-temperature refrigerant flowing through the first heat exchanger 29 may be used to cool the coolant flowing through the battery 34, so as to cool the battery 34. By utilizing the first heat exchanger 29 for cooling the battery 34, a manner of cooling the battery 34 becomes simpler.

In this embodiment, when the temperature of the outdoor space 14 ranges from -18°C to 15°C, and the indoor space 15 and the battery 34 are heated, the first coolant sub-circuit 30 is in communication with the second coolant sub-circuit 32, the second control valve 28 is in a closed state, the first liquid pump 33 delivers, to the battery 34, the coolant heated by the heater 31, and the battery 34 is heated through the heater 31.

In some embodiments, the refrigerant circuit 11 includes a second heat exchanger 35 disposed between the air outlet 25 and the condenser 17. The second heat exchanger 35 may be a water-cooled condenser, which has a simple structure and a relatively light weight. The coolant circuit 26 includes a third coolant sub-circuit 36 passing through the second heat exchanger 35, and the third coolant sub-circuit 36 includes a second liquid pump 37 and a third control valve 38 connected to the second liquid pump 37. The third control valve 38 may be a solenoid valve or an electronic expansion valve. The controller may control opening and closing of the third control valve 38, to establish or interrupt communication in the third coolant sub-circuit 36. When the third control valve 38 is in an open state, the second liquid pump 37 delivers the coolant to the second heat exchanger 35, so that the coolant flowing through the third coolant sub-circuit 36 exchanges heat with the refrigerant flowing through the refrigerant circuit 11 at the second heat exchanger 35. The heat exchange between the third coolant sub-circuit 36 and the refrigerant circuit 11 may be achieved by means of the second heat exchanger 35. In this way, the coolant in the third coolant sub-circuit 36 may be used to cool the refrigerant passing through the second heat exchanger 35.

In this embodiment, when the temperature of the outdoor space 14 is below -18°C and only the indoor space 15 is heated, the second control valve 28 and the third control valve 38 are opened, and the first coolant sub-circuit 30 is not in communication with the second coolant sub-circuit 32. In this case, the heater 31, the first heat exchanger 29, and the second heat exchanger 35 are used to implement rapid heating of the indoor space 15. When the temperature of the outdoor space 14 is below -18°C, and the indoor space 15 and the battery 34 are heated, the first coolant sub-circuit 30 is in communication with the second coolant sub-circuit 32, the second control valve 28 is opened, the first liquid pump 33 delivers the coolant heated by the heater 31 to the battery 34, the battery 34 is heated through the heater 31, and at the same time, the indoor space 15 is rapidly heated by using the first heat exchanger 29.

In some embodiments, the third coolant sub-circuit 36 includes an electronic device assembly 39. The electronic device assembly 39 may include an On-Board Charger (OBC) 40, a DC-DC converter 41, an Autonomous Driving Control Unit (ADCU) 42, a motor 43, and the like, which are not limited by the present disclosure. The electronic device assembly 39 may be connected in parallel with the third control valve 38 and the second heat exchanger 35. The second liquid pump 37 is connected to the electronic device assembly 39, and is configured to deliver the coolant to the electronic device assembly 39, so that the electronic device assembly 39 can be cooled. The second liquid pump 37 may pressurize the coolant, to ensure that the coolant can circulate in the third coolant sub-circuit 36. When the third control valve 38 is in the open state, the second liquid pump 37 may deliver the coolant to the second heat exchanger 35 and the electronic device assembly 39.

In some embodiments, the coolant circuit 26 includes a fourth coolant sub-circuit 48, and the fourth coolant sub-circuit 48 includes a radiator 44. The radiator 44 is configured to cool the coolant. The radiator 44 may be a water tank. The fourth coolant sub-circuit 48 may include a cooling fan 45, and the cooling fan 45 may be disposed to directly face the radiator 44, to quickly cool the radiator 44. The fourth coolant sub-circuit 48 is selectively in communication with the third coolant sub-circuit 36, where the fourth coolant sub-circuit 48 may or may not be in communication with the third coolant sub-circuit 36. When the fourth coolant sub-circuit 48 is in communication with the third coolant sub-circuit 36, and when the third control valve 38 is in the open state, the coolant flowing through the radiator 44 exchanges heat with the refrigerant flowing through the refrigerant circuit 11 at the second heat exchanger 35. In this way, the low-temperature coolant flowing through the radiator 44 can be used to cool the refrigerant flowing through the second heat exchanger 35, so that a cooling effect is better. In this embodiment, when the temperature of the outdoor space 14 is above 35°C and only the indoor space 15 is cooled, the fourth coolant sub-circuit 48 may be in communication with the third coolant sub-circuit 36, and the second liquid pump 37 may deliver the coolant to the radiator 44, so that the radiator 44 may be used to dissipate heat brought by the second heat exchanger 35 to an external air. When the temperature of the outdoor space 14 is above 35°C, and the indoor space 15 and the battery 34 are cooled, the first coolant sub-circuit 30 is in communication with the second coolant sub-circuit 32, the second control valve 28 is opened, the first liquid pump 33 delivers the coolant passing through the first heat exchanger 29 to the battery 34, and the battery 34 is cooled by using the first heat exchanger 29. In addition, the fourth coolant sub-circuit 48 is in communication with the third coolant sub-circuit 36, and the second liquid pump 37 delivers the coolant to the radiator 44, so that the radiator 44 can be used to dissipate the heat brought by the second heat exchanger 35 to the external air. When the temperature of the outdoor space 14 is 15°C to 35°C, and the indoor space 15 and the battery 34 are cooled, the first coolant sub-circuit 30 is in communication with the second coolant sub-circuit 32, the second control valve 28 is opened, the first liquid pump 33 delivers the coolant passing through the first heat exchanger 29 to the battery 34, and the battery 34 is cooled through the first heat exchanger 29. When the temperature of the outdoor space 14 is -18°C to 15°C, the indoor space 15 is heated, and the battery 34 is cooled, the first coolant sub-circuit 30 is in communication with the second coolant sub-circuit 32, the second control valve 28 is opened, and the battery 34 is cooled through the first heat exchanger 29. When the temperature of the outdoor space 14 is below -18°C, the indoor space 15 is heated, and the battery 34 is cooled, the first coolant sub-circuit 30 is not in communication with the second coolant sub-circuit 32, the second coolant sub-circuit 32 is in communication with the fourth coolant sub-circuit 48, the second control valve 28 and the third control valve 38 are opened. In this case, the heater 31, the first heat exchanger 29, and the second heat exchanger 35 are used to implement rapid heating of the indoor space 15. The battery 34 is cooled through the radiator 44.

In some embodiments, the coolant circuit 26 includes a first four-way valve 46 and a second four-way valve 47. The first coolant sub-circuit 30, the second coolant sub-circuit 32, the third coolant sub-circuit 36, and the fourth coolant sub-circuit 48 are all connected to the first four-way valve 46 and the second four-way valve 47. In other words, the first coolant sub-circuit 30, the second coolant sub-circuit 32, the third coolant sub-circuit 36, and the fourth coolant sub-circuit 48 are selectively in communication with each other via the first four-way valve 46 and the second four-way valve 47. The first four-way valve 46 and the second four-way valve 47 are used to integrate the first coolant sub-circuit 30, the second coolant sub-circuit 32, the third coolant sub-circuit 36, and the fourth coolant sub-circuit 48, which can further reduce the assembly time and reduce the cost.

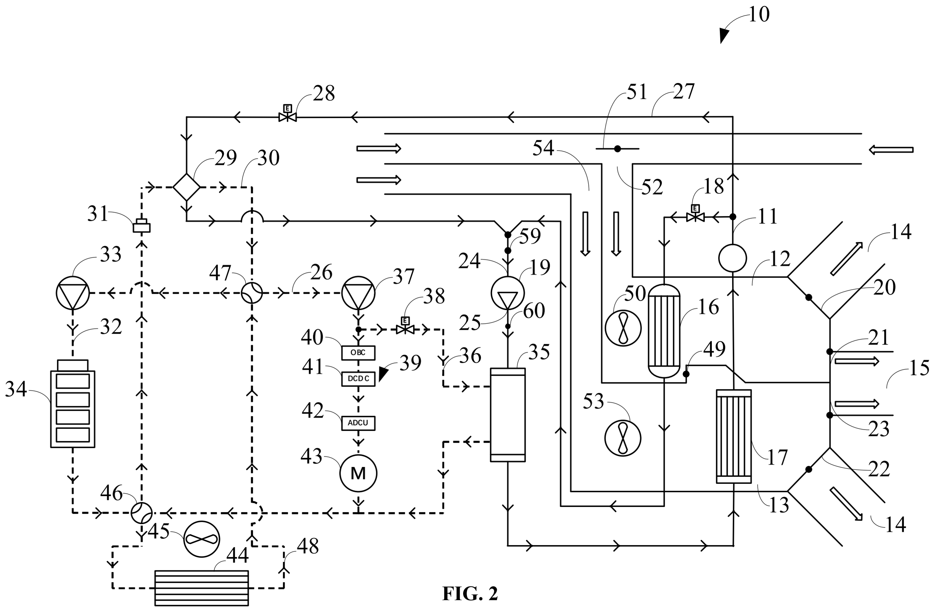

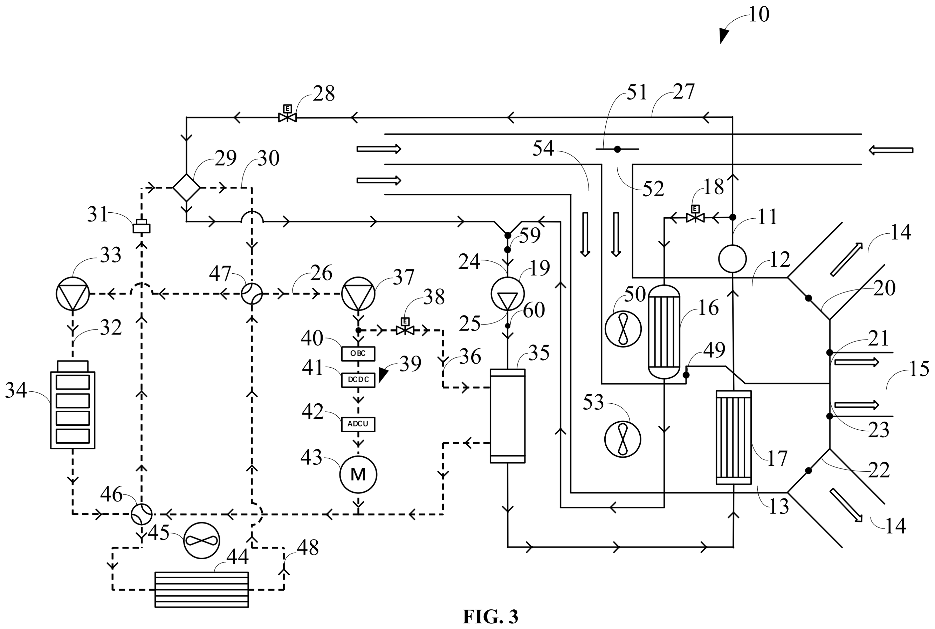

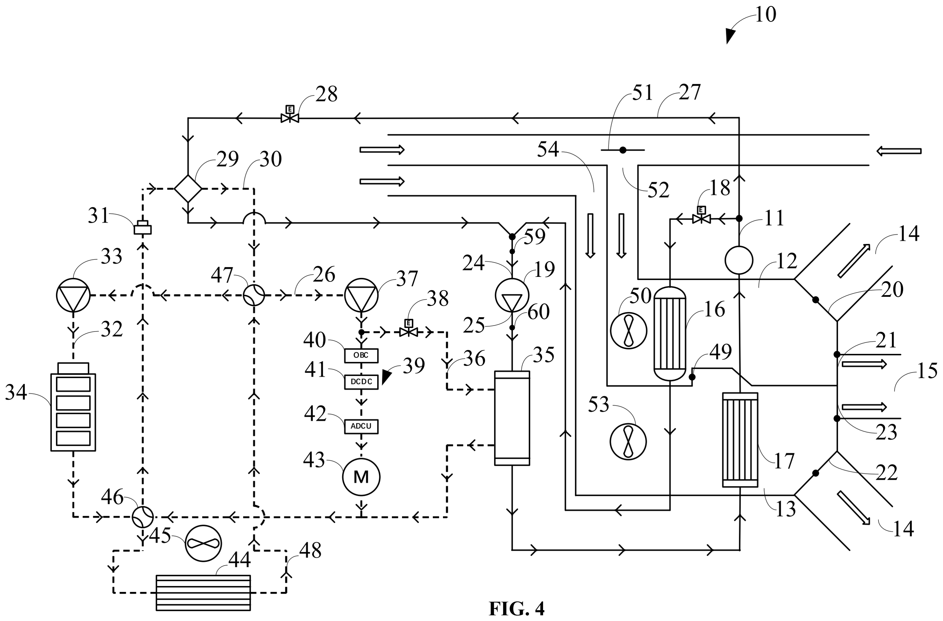

In this embodiment, the first coolant sub-circuit 30 is connected to a first end of the first four-way valve 46 and a first end of the second four-way valve 47. The second coolant sub-circuit 32 is connected to a second end of the first four-way valve 46 and a second end of the second four-way valve 47. The third coolant sub-circuit 36 is connected to a third end of the first four-way valve 46 and a third end of the second four-way valve 47. The fourth coolant sub-circuit 48 is connected to a fourth end of the first four-way valve 46 and a fourth end of the second four-way valve 47. As shown in FIG. 1, the first end and the second end of the first four-way valve 46 are communicated with each other, and the third end and the fourth end of the first four-way valve 46 are communicated with each other. The first end and the second end of the second four-way valve 47 are communicated with each other, and the third end and the fourth end of the second four-way valve 47 are communicated with each other. As shown in FIG. 2, the first end and the second end of the first four-way valve 46 are communicated with each other, and the third end and the fourth end of the first four-way valve 46 are communicated with each other. The first end and the third end of the second four-way valve 47 are communicated with each other, and the second end and the fourth end of the second four-way valve 47 are communicated with each other. As shown in FIG. 3, the first end and the third end of the first four-way valve 46 are communicated with each other, and the second end and the fourth end of the first four-way valve 46 are communicated with each other. The first end and the second end of the second four-way valve 47 are communicated with each other, and the third end and the fourth end of the second four-way valve 47 are communicated with each other. As shown in FIG. 4, the first end and the third end of the first four-way valve 46 are communicated with each other, and the second end and the fourth end of the first four-way valve 46 are communicated with each other. The first end and the third end of the second four-way valve 47 are communicated with each other, and the second end and the fourth end of the second four-way valve 47 are communicated with each other. As such, FIGS. 1 to 4 may form four types of coolant channels.

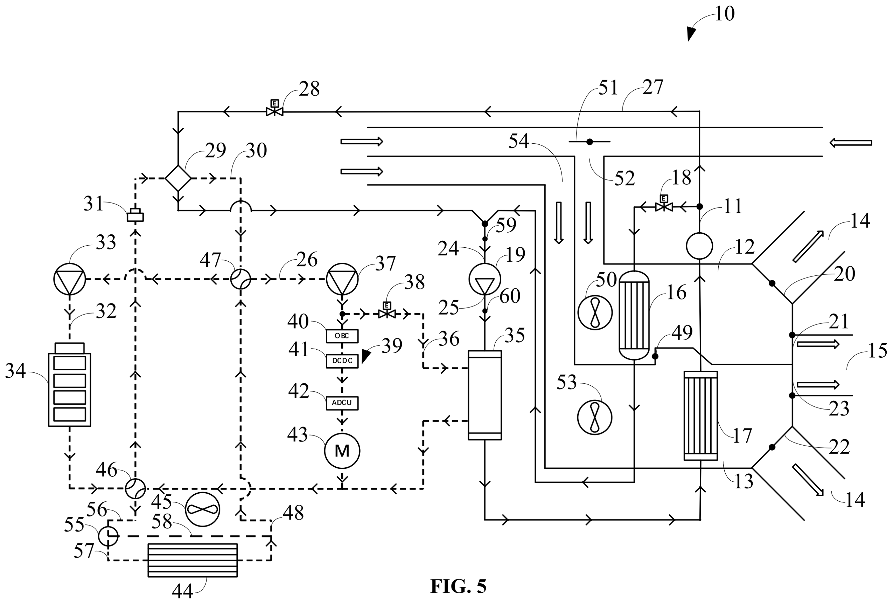

Referring to FIG. 5, in some embodiments, the fourth coolant sub-circuit 48 includes a three-way valve 55, a main path 56, a first branch 57, and a second branch 58. The radiator 44 is disposed on the first branch 57. A first end of the three-way valve 55 is connected to the main path 56, a second end of the three-way valve 55 is connected to the first branch 57, and a third end of the three-way valve 55 is connected to the second branch 58. The first end, the second end, and the third end of the three-way valve 55 may be communicated with each other, or the first end and the second end of the three-way valve 55 may be communicated with each other, or the first end and the third end of the three-way valve 55 may be communicated with each other. In this way, the control effect is better. The first four-way valve 46, the second four-way valve 47, and the three-way valve 55 are integrated into a nine-way valve, enabling a higher integration.

The present disclosure further provides a new energy vehicle, including the foregoing thermal management system.

Other implementations of the present disclosure will be apparent to those skilled in the art upon consideration of the specification and practice of the present disclosure disclosed herein. The present disclosure is intended to cover any variations, uses, or adaptations of the present disclosure that follow the general principles thereof and include common general knowledge or conventional technical means in the art that are not disclosed in the present disclosure. The specification and embodiments are intended to be illustrative only, and the true scope and spirit of the present disclosure are indicated by the following claims.

It is to be understood that the present disclosure is not limited to the precise structures that have been described above and shown in the accompanying drawings, and various modifications and changes may be made without departing from the scope of the present disclosure. The scope of the present disclosure is limited only by the appended claims.

## Claims

1. A thermal management system, comprising:
a first space and a second space disposed separately, wherein the first space is communicated with at most one of an outdoor space and an indoor space, and the second space is communicated with at most one of the outdoor space and the indoor space; and
a refrigerant circuit, comprising an evaporator, a condenser, a first control valve, and a compressor, wherein the evaporator is disposed in the first space, the condenser is disposed in the second space, the compressor comprises an air inlet and an air outlet, one end of the evaporator is connected to the first control valve, the other end of the evaporator is connected to the air inlet, one end of the condenser is connected to the air outlet, and the other end of the condenser is connected to the first control valve.

2. The thermal management system according to claim 1, further comprising a coolant circuit and a refrigerant branch, wherein
the refrigerant branch is connected between the condenser and the air inlet, and is connected in parallel with the first control valve and the evaporator;
the refrigerant branch comprises a second control valve and a first heat exchanger, the second control valve being located between the condenser and the first heat exchanger;
the coolant circuit comprises a first coolant sub-circuit passing through the first heat exchanger; and
when the second control valve is in an open state, the refrigerant branch is in communication, and a coolant flowing through the first coolant sub-circuit exchanges heat with a refrigerant flowing through the refrigerant branch at the first heat exchanger.

3. The thermal management system according to claim 2, wherein
the first coolant sub-circuit further comprises a heater configured to heat the coolant, and the heater is connected to the first heat exchanger; and
when the second control valve is in the open state and the heater is in an on state, the coolant flowing through the heater is heated, and the heated coolant exchanges heat with the refrigerant flowing through the refrigerant branch at the first heat exchanger.

4. The thermal management system according to claim 2 or 3, wherein
the coolant circuit further comprises a second coolant sub-circuit, the second coolant sub-circuit comprises a first liquid pump and a battery, and the first liquid pump is connected to the battery and is configured to deliver the coolant to the battery;
the first coolant sub-circuit is selectively in communication with the second coolant sub-circuit via a first four-way valve and a second four-way valve; and
when the first coolant sub-circuit is in communication with the second coolant sub-circuit and the second control valve is in the open state, the coolant flowing through the battery exchanges heat with the refrigerant flowing through the refrigerant branch at the first heat exchanger.

5. The thermal management system according to claim 1, further comprising a coolant circuit, wherein
the refrigerant circuit further comprises a second heat exchanger disposed between the air outlet and the condenser;
the coolant circuit comprises a third coolant sub-circuit passing through the second heat exchanger, and the third coolant sub-circuit comprises a second liquid pump and a third control valve connected to the second liquid pump; and
when the third control valve is in an open state, the second liquid pump delivers a coolant to the second heat exchanger, so that the coolant flowing through the third coolant sub-circuit exchanges heat with a refrigerant flowing through the refrigerant circuit at the second heat exchanger.

6. The thermal management system according to claim 5, wherein the third coolant sub-circuit further comprises an electronic device assembly, and the second liquid pump is connected to the electronic device assembly and is configured to deliver the coolant to the electronic device assembly.

7. The thermal management system according to claim 5 or 6, wherein
the coolant circuit further comprises a fourth coolant sub-circuit, and the fourth coolant sub-circuit comprises a radiator;
the fourth coolant sub-circuit is selectively in communication with the third coolant sub-circuit via a first four-way valve and a second four-way valve; and
when the fourth coolant sub-circuit is in communication with the third coolant sub-circuit and the third control valve is in the open state, the coolant flowing through the radiator exchanges heat with the refrigerant flowing through the refrigerant circuit at the second heat exchanger.

8. The thermal management system according to any one of claims 1 to 7, further comprising a first air flap disposed between the first space and the second space,
wherein when the first air flap is opened, the first space is in communication with the second space; and
when the first air flap is closed, the first space is isolated from the second space.

9. The thermal management system according to any one of claims 1 to 8, further comprising a first fan and a second air flap, wherein
the first fan is disposed in the first space, the first space is provided with a first air vent, and the first fan is configured to deliver air from the first air vent to the evaporator; and
the second air flap is rotatably disposed at the first air vent to enable the first space to be in communication with at least one of the outdoor space or the indoor space.

10. The thermal management system according to any one of claims 1 to 9, further comprising a second fan, wherein the second fan is disposed in the second space, the second space is provided with a second air vent, the second air vent enables communication between the outdoor space and the second space, and the second fan is configured to deliver air from the second air vent to the condenser.

11. The thermal management system according to any one of claims 1 to 10, further comprising a third air flap and a fourth air flap, wherein
the third air flap is openably disposed between the first space and the outdoor space, when the third air flap is opened, the first space is in communication with the outdoor space, and when the third air flap is closed, the first space is not in communication with the outdoor space; and
the fourth air flap is openably disposed between the first space and the indoor space, when the fourth air flap is opened, the first space is in communication with the indoor space, and when the fourth air flap is closed, the first space is not in communication with the indoor space.

12. The thermal management system according to any one of claims 1 to 11, further comprising a fifth air flap and a sixth air flap, wherein
the fifth air flap is openably disposed between the second space and the outdoor space, when the fifth air flap is opened, the second space is in communication with the outdoor space, and when the fifth air flap is closed, the second space is not in communication with the outdoor space; and
the sixth air flap is openably disposed between the second space and the indoor space, when the sixth air flap is opened, the second space is in communication with the indoor space, and when the sixth air flap is closed, the second space is not in communication with the indoor space.

13. The thermal management system according to claim 1, further comprising a coolant circuit, wherein
the coolant circuit comprises a first coolant sub-circuit, a second coolant sub-circuit, a third coolant sub-circuit, a fourth coolant sub-circuit, a first four-way valve, and a second four-way valve; and
the first coolant sub-circuit, the second coolant sub-circuit, the third coolant sub-circuit, and the fourth coolant sub-circuit are all connected to the first four-way valve and the second four-way valve.

14. The thermal management system according to claim 13, wherein the fourth coolant sub-circuit comprises a radiator, a three-way valve, a main path, a first branch, and a second branch, the radiator is disposed on the first branch, a first end of the three-way valve is connected to the main path, a second end of the three-way valve is connected to the first branch, and a third end of the three-way valve is connected to the second branch.

15. A new energy vehicle, comprising the thermal management system according to any one of claims 1 to 14.
